(19) Europäisches Patentamt

European Patent Office

Office européen des brevets

(11) **EP 1 143 668 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(51) Int Cl.:
*H04L 12/44* *(2006.01)*

(21) Anmeldenummer: **01000089.1**

(22) Anmeldetag: **29.03.2001**

(54) **Auflösung von Medienzugriffskonflikten in Netzwerken mit mehreren Netzknoten und wenigstens einem Sternknoten**

Resolving media access conflicts in networks with a plurality of network nodes and at least one star node

Solution des conflits d'acces aux supports dans des réseaux avec plusieurs noeuds et au moins un noed central

(84) Benannte Vertragsstaaten:
**DE FR GB**

(30) Priorität: **06.04.2000 DE 10016829**

(43) Veröffentlichungstag der Anmeldung:
**10.10.2001 Patentblatt 2001/41**

(73) Patentinhaber:
- **Philips Intellectual Property & Standards GmbH**
  **20099 Hamburg (DE)**
  Benannte Vertragsstaaten:
  **DE**
- **Koninklijke Philips Electronics N.V.**
  **5621 BA Eindhoven (NL)**
  Benannte Vertragsstaaten:
  **FR GB**

(72) Erfinder:
- **Fuhrmann,Peter c/o Philips Corp. Intel. Prop. GmbH**
  **52064, Aachen (DE)**

- **Budde,Wolfgang c/o Philips Corp. Intel.Prop. GmbH**
  **52064, Aachen (DE)**

(74) Vertreter: **Volmer, Georg et al**
**Philips Intellectual Property & Standards GmbH,**
**Postfach 50 04 42**
**52088 Aachen (DE)**

(56) Entgegenhaltungen:
WO-A-98/54901        US-A- 4 428 046
US-A- 5 621 895

- **SUDA T ET AL: "TREE LANS WITH COLLISION AVOIDANCE: PROTOCOL AND SWITCH ARCHITECTURE" GLOBAL TELECOMMUNICATIONS CONFERENCE. TOKYO, NOV. 15 - 18, 1987, PROCEEDINGS OF THE GLOBAL TELECOMMUNICATIONS CONFERENCE AND EXHIBITION(GLOBECOM), NEW YORK, IEEE, US, Bd. 3, 15. November 1987 (1987-11-15), Seiten 1410-1414, XP000938610**

**Beschreibung**

Die Erfindung bezieht sich auf ein Netzwerk mit mehreren Netzknoten, bei dem wenigstens ein Teil der Netzknoten über wenigstens einen Sternknoten direkt miteinander gekoppelt sind,
wobei der Sternknoten mehrere Sternschnittstellen enthält, die wenigstens einem Netzknoten zugeordnet sind,
wobei eine Sternschnittstelle jeweils in Abhängigkeit von einem Pilotsignal zur Weiterleitung von Daten von dem zugeordneten Netzknoten zu den anderen Sternschnittstellen oder von einer anderen Sternschnittstelle zu wenigstens einem der zugeordneten Netzknoten vorhanden ist und
wobei auch im Fall des gleichzeitigen Eintreffens von wenigstens zwei Pilotsignalen in den jeweiligen Sternschnittstellen eine Entscheidungsschaltung zur Freigabe einer Sternschnittstelle für die Aussendung von Daten vorhanden ist.

Solche Netzwerke können beispielsweise in Kraftfahrzeugen, in der Luft- und Raumfahrttechnik, in der Industrieautomatisierung (z.B. Sensorsysteme) und Hausautomatisierung (z.B. Lichttechnik, Alarmanlagen, Heizungsanlage, Klimatechnik etc.) eingesetzt werden.

In einem solchen Netzwerk für die Kraftfahrzeugtechnik kann z.B. das aus der Zeitschrift "Elektronik", Nr. 14, 1999, Seiten 36 bis 43 (Dr. Stefan Polenda, Georg Kroiss: "TTP: "Drive by Wire" in greifbarer Nähe") bekannte TTP-Protokoll (TTP = Time-Triggered Protocol) verwendet werden. Dieses Protokoll ermöglicht eine sichere Datenübertragung und kann daher auch in Netzwerken für sicherheitsrelevante Vorrichtungen (z.B. Bremsen) gebraucht werden. In dem erwähnten Artikel ist als Netzwerkstruktur ein Bussystem erwähnt.

Aus US-A-4 428 046 ist noch ein Datenverarbeitungssystem bekannt, welches eine Anzahl von über einen Sternkoppler verbundene Subsysteme enthält. Der Sternkoppler weist eine komplexe Entscheidungsschaltung zur Steuerung des Sternkopplers auf, Dadurch kann immer nur ein ausgewähltes Subsystem Nachrichten durch den Sternkoppler senden. Die Entscheidungsschaltung besteht aus einem aufwendig realisierten Prioritätendecoder, der für eine bestimmte festgelegte Anzahl von Subsystemen ausgelegt ist.

Der Erfindung liegt die Aufgabe zugrunde, ein anderes Netzwerk mit mehreren Netzknoten mit einer flexiblen Entscheidungsschaltung zu schaffen.

Die Aufgabe wird durch ein Netzwerk der eingangs genannten Art dadurch gelöst, dass die Entscheidungsschaltung eine Kette von hintereinandergeschalteten Entscheidungselementen enthält,
dass jedes Entscheidungselement zur Verknüpfung des Ausgangssignals des vorhergehenden Entscheidungselementes mit einem von der Pilotsignal-Auswerteschaltung erzeugten, das Vorhandensein des Pilotsignals angebenden lokalen Sendeanforderungssignals vorhanden ist und
dass das Ausgangssignal des Entscheidungselementes das Entscheidungs-Steuersignal für die dem nächsten Entscheidungselement in der Kette zugeordnete Sternschnittstelle ist.

Die dieser Erfindung zugrundeliegende Idee ist die Steuerung eines Sternknotens mittels eines Pilotsignals, das von den Netzknoten erzeugt wird. Das Pilotsignal wird vor und nach einer Nachrichtenübertragung so geändert, dass eine im Sternknoten enthaltene und einem Netzknoten zugeordnete Sternschnittstelle erkennt, wenn der zugeordnete Netzknoten das Pilotsignal verändert. Im Sternknoten werden dann die anderen Sternschnittstellen so geschaltet, dass sie nur eine Nachricht von der Sternschnittstelle erhalten, die eine Nachricht von dem zugeordneten Netzknoten empfängt.

Eine solche Signalisierung ist speziell für zeitgesteuerte Kommunikationsprotokolle geeignet, die über ein entsprechendes Zugriffsverfahren (TDMA = Time Division Multiplex Access) sicherstellen, dass nur jeweils ein Netzknoten das Medium zur Übertragung seiner Nachricht verwenden kann. Allerdings kann auch bei solchen Verfahren der ausschließliche Zugriff durch nur einen Netzknoten nicht garantiert werden. Die Situation eines gleichzeitigen Zugriffs kann sowohl im Fehlerfall, als auch während des Systemstarts auftreten, d.h. in einer Übergangsphase, während der feste Zeitrahmen für die Kommunikation noch nicht für alle Knoten gleichermaßen vorgegeben ist.

Erfindungsgemäß wird ein solcher Zugriffskonflikt mit Hilfe einer Entscheidungsschaltung gelöst, die bei gleichzeitigem Eintreffen von mehreren Pilotsignalen eine bestimmte Sternschnittstelle zur Sendung von Daten freigibt. Die Kollisionsauflösung innerhalb des Sternknotens ermöglicht den Einsatz des Netzwerks auch für Protokolle, die z.B. für einen dezentralisierten Systemstart auf eine Kollisionsbehandlung angewiesen sind. Speziell für Anwendungen, die höchste Ansprüche an Zuverlässigkeit und Verfügbarkeit des Kommunikationssystems stellen, muss jeder Netzknoten in der Lage sein, durch die Vorgabe des Kommunikationsrahmens den Nachrichtenaustausch bei einem Systemstart oder nach dem Ausfall der Kommunikation im laufenden Betrieb wieder korrekt aufzunehmen.

Jedem Netzknoten im Netzwerk ist ein bestimmter, periodisch sich wiederholender Zeitabschnitt zur Sendung seiner Nachrichten zugeordnet. Der Pilotsignalgenerator in einem Netzknoten signalisiert bei Aussendung eines Pilotsignals diesen Zeitabschnitt. Das Pilotsignal kann auf verschiedene Weise von der eigentlichen Nachricht unterschieden werden. Beispielsweise verwendet das Pilotsignal einen anderen Frequenzbereich als das Signal mit der zu übertragenden Nachricht.

Eine Pilotsignal-Auswerteschaltung erzeugt ein Sende-Steuersignal, welches aktiviert wird, wenn ein Pilotsignal von dem zugeordneten Netzknoten ausgesendet worden ist und wenn von keiner anderen Sternschnittstelle mit höherer Priorität gleichzeitig ein Pilotsignal von dem dieser anderen Sternschnittstelle zugeordneten Netzknoten ausgesendet worden ist. Eine Sternschnittstelle leitet nur bei aktiviertem Sende-Steuersignal Daten von dem zugeordneten Netzknoten zu den anderen Sternschnittstellen weiter.

Jede Sternschnittstelle ein erstes und zweites Schaltelement enthält. Die Schaltelemente, die ein schaltbarer Verstärker sein können, steuern in Abhängigkeit vom Pilotsignal den Nachrichtenfluss in einer Sternschnittstelle.

Die Entscheidung, welche Sternschnittstelle bei einem Zugriffskonflikt Daten Senden darf trifft eine Entscheidungsschaltung.

Ferner bezieht sich die Erfindung auf einen Sternknoten in einem Netzwerk zur Kopplung von mehreren Netzknoten.

Ausführungsbeispiele der Erfindung werden nachstehend anhand der Fig. näher erläutert. Es zeigen:

Fig. 1    ein Netzwerk in Sternstruktur mit mehreren Netzknoten, die über einen aktiven Sternknoten gekoppelt sind

Fig. 2    eine Ausführungsform einer Sternschnittstelle in einem Sternknoten

Fig. 3    eine Ausführungsform eines Sternknotens mit mehreren Sternschnittstellen

Fig. 4    einen Teil eines Netzknotens mit einem Pilotsignalgenerator,

Fig. 5    ein Teil eines Zeitverlaufs zweier Signale im Netzwerk und

Fig. 6    eine weitere Ausführungsform einer Sternschnittstelle.

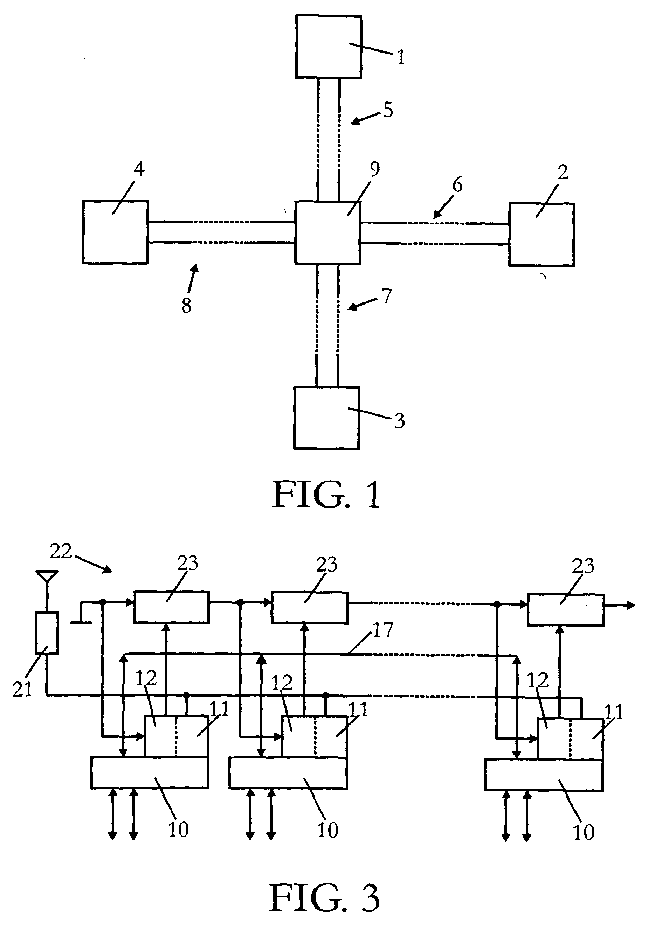

Ein Ausführungsbeispiel des erfindungsgemäßen Netzwerks ist in Fig. 1 dargestellt. Dieses Netzwerk enthält beispielsweise vier Netzknoten 1 bis 4, die jeweils über verdrillte, für eine symmetrische Signalübertragung vorgesehene Leitungspaare (5 bis 8) (twisted-pair) miteinander über einen aktiven Sternknoten 9 gekoppelt sind. Der aktive Sternknoten 9 führt eine Leitungsanpassung durch, so dass die Leitungspaare (5 bis 8) im aktiven Sternknoten 9 mit dem Wellenwiderstand abgeschlossen snd, und detektiert ein von einem Netzknoten 1 bis 4 ausgesendetes Pilotsignal. Wenn die Leitungspaare (5 bis 8) ohne aktiven Sternknoten 9 miteinander verbunden wären, entstände für jedes Leitungspaar im Stempunkt eine Fehlanpassung durch den Impedanzsprung von $Z_0$ auf $1/3 Z_0$, die durch die Parallelschaltung der jeweils anderen Leitungspaare verursacht wird. Zur Erzeugung eines Pilotsignals enthält noch jeder Netzknoten 1 bis 4 einen Pilotsignalgenerator.

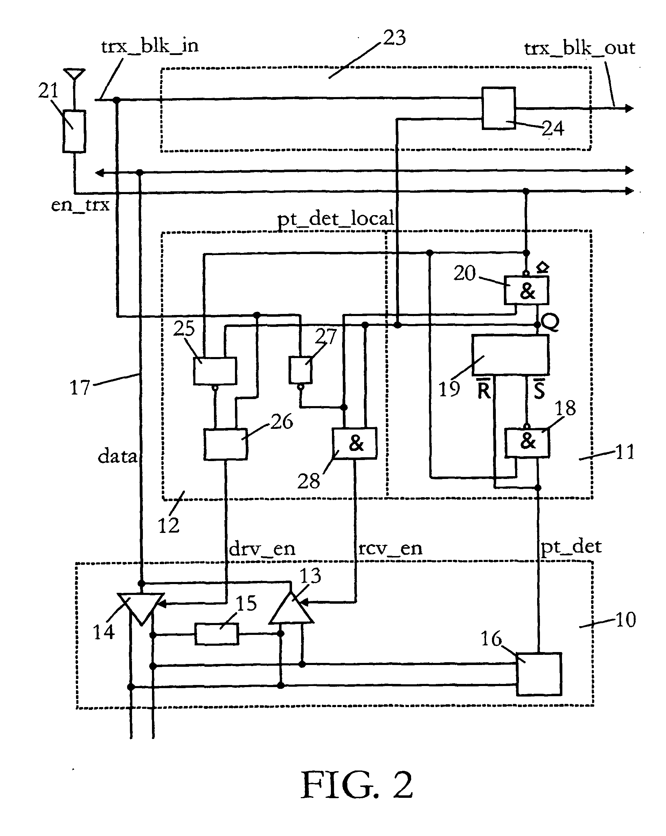

Der aktive Sternknoten 9 enthält für jedes Leitungspaar (5 bis 8) eine Sternschnittstelle, die eine Weiterleitung der Nachrichten eines sendenden Netzknotens zu allen anderen am aktiven Stern angeschlossenen Netzknoten ermöglicht. Ein Ausführungsbeispiel einer solchen Sternschnittstelle ist in Fig. 2 gezeigt, die eine Leitungsanschlussschaltung 10, eine lokale Pilotsignal-Auswerteschaltung 11 und eine lokale Verstärker-Steuerschaltung 12 enthält.

Die Leitungsanschlussschaltung 10 enthält zwei schaltbare Verstärker 13 und 14, einen Abschlusswiderstand 15 und einen Pilotsignaldetektor 16. Ein Leitungspaar (5 bis 8) (vgl. Fig. 1) ist mit den Eingängen des schaltbaren Verstärkers 13, mit den Ausgängen des schaltbaren Verstärkers 14, mit den Eingängen des Pilotsignaldetektors 16 und mit dem Abschlusswiderstand 15 verbunden. Der Wert des Abschlusswiderstandes 15 entspricht dem Wellenwiderstand und dient damit zum korrekten Leitungsabschluss.

Wenn der schaltbare Verstärker 13 von einem von der lokalen Verstärker-Steuerschaltung 12 gelieferten Schaltsignal rcv_en aktiviert wind, so werden die von dem zugeordneten Leitungspaar kommenden Daten zu einer Datenleitung 17 (data) geführt und damit an die anderen Sternschnittstellen weitergegeben. Bei Aktivierung des schaltbaren Verstärkers 14 durch ein Schaltsignal drv_en, das auch von der Verstärker-Steuerschaltung 12 geliefert wird, werden die von einer anderen Sternschnittstelle über die Datenleitung 17 ankommenden Daten auf das zugeordnete Leitungspaar (5 bis 8) gegeben.

Ein schaltbarer Verstärker 13 oder 14 kann auch als Reihenschaltung aus Verstärker und Schalter (Schaltelement) ausgeführt werden. Im geschlossenen Zustand dieses Schalters wird das Ausgangssignal des Verstärkers 13 oder 14 weitergeleitet.

Wenn der Pilotsignaldetektor 16 auf dem Leitungspaar (5 bis 8) ein Pilotsignal detektiert, zeigt dies das von dem Pilotsignaldetektor 16 erzeugte Steuersignal pt_det an, z.B. durch einen Zustandswechsel von einem niedrigen zu einem hohen Zustand. Der Ausgang des Pilotsignaldetektors 16 ist mit dem Eingang eines invertierenden UND-Gatters 18 verbunden, das Bestandteil der Pilotsignal-Auswerteschaltung 11 ist. Ferner enthält die Pilotsignal-Auswerteschaltung 11 eine setz- und löschbare Speicheranordnung 19 (z.B. RS-Kippglied) und ein weiteres invertierendes UND-Gatter 20, das über einen "Open Collector"-Ausgang verfügt. Die Speicheranordnung 19 weist einen Setzeingang $\overline{S}$, einen Rücksetzeingang $\overline{R}$ und einen Ausgang Q auf. Die Wahrheitstabelle für diese Speicheranordnung 19 hat folgenden Inhalt:

| $\overline{S}$ | $\overline{R}$ | Q |
|---|---|---|
| 0 | 0 | 1 |
| 0 | 1 | 1 |
| 1 | 0 | 0 |
| 1 | 1 | Q |

Der invertierende Ausgang des UND-Gatters 18 ist mit dem Setzeingang $\overline{S}$ der Speicheranordnung 19 verbunden, deren Ausgang Q an einen Eingang des UND-Gatters 20 angeschlossen ist. Der Rücksetzeingang $\overline{R}$ der Speicheranordnung 19 ist noch mit dem Ausgang des Pilotsignaldetektors 16 gekoppelt und der Ausgang des UND-Gatters 20 mit einem weiteren Eingang des UND-Gatters 18.
Der invertierende Ausgang des UND-Gatters 20, das ein Sende-Steuersignal en_trx liefert, ist mit einer Spannungsquelle über einen Widerstand 21 gekoppelt. Der Ausgang des invertierenden UND-Gatter 20 stellt somit einen "Open Collector"-Ausgang dar.

Die Erkennung eines Pilotsignals durch den Pilotsignaldetektors 16 reicht nicht aus, um zu bestimmen, ob das Pilotsignal von dem zugeordneten Netzknoten ausgesendet oder ob das Pilotsgnal über den Sternknoten 9 in das zugeordnete Leitungspaar eingespeist werden ist. Dies ist jedoch notwendig um festzustellen, ob der zugeordnete Netzknoten ein aktiver Sender eines Pilotsignals und damit auch der nachfolgenden Daten ist. Hierzu dient die Pilotsignal-Auswerteschaltung 11 mit der Sreicheranordnung 19, die jeweils den Zustand des Steuersignals pt_det des Pilotsignaldetektors speichert.

Das Ausgangsagnal am Ausgang Q der Speicheranordnung 19 steuert das UND-Gatter 20, welches das Sende-Steuersignal en_trx beeinflusst und zusammen mit dem Widerstand 21 und den UND-Gattern 20 der anderen Sternschnittstellen eine "Wired-OR"-Schaltung bildet. Das Sende-Steuersignal en_trx wird als nicht aktiviert angesehen, solange es einen hohen Zustand (logischer "1"-Pegel) aufweist. Dies wird durch den angeschlossenen Widerstand 21 erreicht, der das Sende-Steuersignal en_trx auf den logischen "1"- Pegel hält. Eine Aktivierung erfolgt, d.h. das Sende-Steuersignal en_trx ist aktiv, durch das Schalten gegen den logischen "0"-Pegel ("active low"). Wenn eine der an dem Widerstand 21 angeschlossenen Sternschnittstellen einen Sendewunsch durch Wechsel des Zustands im Ausgangssignals des zugeordneten UND-Gatters 20 signalisiert, wird das Sende-Steuersignal en_trx aktiv und dieser Zustandswechsel für die übrigen Sternschnittstellen dadurch erkennbar.

Aktiviert eine Sternschnittstelle durch sein UND-Gatter 20 das Sende-Steuersignal en_trx, so bewirkt dies in allen anderen Sternschnittstellen, dass ein zeitlich später eintreffender Sendewunsch, signalisiert durch das Steuersignal pt_det, sich nicht mehr durchsetzen kann. Dies wird durch das invertierende UND-Gatter 18 sichergestellt, welches die Weitergabe des Steuersignals pt_det bei einem aktiven Sende-Steuersignal en_trx verhindert. In der Sternschnittstelle, welche das Sende-Steuersignal en_trx selbst aktiviert hat, kommt es ebenfalls durch das UND-Gatter 18 zu einer Abschaltung des Setzsignals für die Speicheranordnung 19. Allerdings wid der zuvor gesetzte Zustand durch die Speicheranordnung beibehalten, bis der zugeordnete Pilotsignaldetektor 16 das Ende der Übertragung signalisiert. Am Ende der Übertragung deaktiviert der Pilotsignaldetektor 16 das Steuersignal pt_det und setzt dadurch die Speicheranordnung 19 über den Rücksetzeingang $\overline{R}$ zurück. Über das UND-Gatter 20 wird das Sende-Steuersignal en_trx nicht länger aktiviert und durch den Widerstand 21 wieder in den inaktiven Zustand (logischer "1"-Pegel) gebracht.

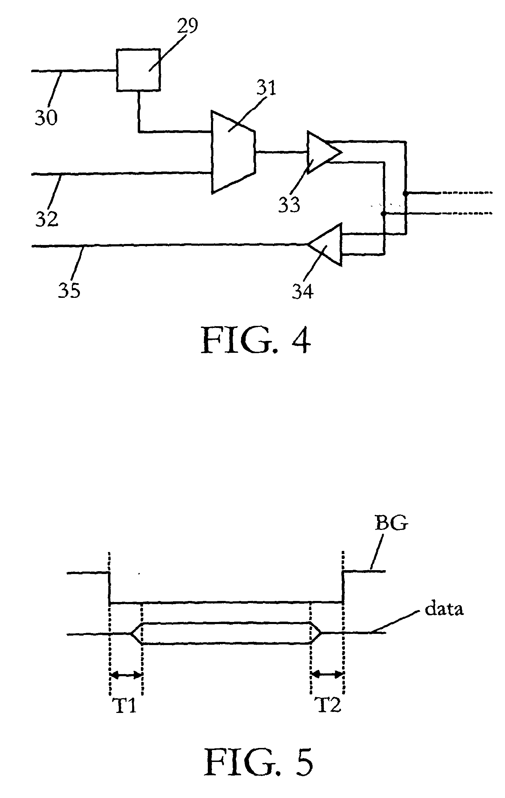

In dem aktiven Sternknoten 9 ist noch eine Entscheidungsschaltung 22 (Fig 3) enthalten. Die Entscheidungsschaltung 22 weist für jede Sternschnittstelle ein Entscheidungselement 23 auf, welches ein ODER-Gatter 24 beinhaltet. Wie Fig. 3 zeigt, sind die Entscheidungselemente 23 in einer Kette verschaltet und bilden die Entscheidungsschaltung 22. Zusätzlich sind in Fig. 3 die einem Entscheidungselement 22 zugeordneten Leitungsanschlussschaltungen 10, lokalen Pilotsignal-Auswerteschaltungen 11 und Verstärker-Steuerschaltungen 12 dargestellt. Ein einer Sternschnittstelle zugeordnetes Entscheidungselement 23 erhält als lokales Sendeanforderungssignal p_det_local das Ausgangssignal der Speicheranordnung 19. Das lokale Sendeanforderungssignal p_det_local wird einem ersten Eingang und ein Entscheidungs-Steuersignal trx_blk_in wird einem zweiten Eingang des ODER-Gatters 24 zugeführt. Das Ausgangssignal trx_blk_out dieses ODER-Gatters 24 wird als Entscheidungs-Steuersignal trx_blk_in dem nächsten Entscheidungselement 23 zugeführt. Der erste Eingang des ODER-Gatters 24 des ersten Entscheidungselementes 23 der Kette ist mit einem Masseanschluss (logischer "0"-Pegel) verbunden. Durch diese Verschaltung hat die Sternschnittstelle, deren zugeordnetes Entscheidungselement 23 mit Masse verbunden ist, die höchste Priorität. Die Sternschnittstellen der zugeordneten nachfolgenden Entscheidungselemente 23 in der Kette weisen entsprechend ihrer Position in der Kette eine geringere Priorität auf. Die Sternschnittstelle, deren Entscheidungselement 23 am Ende der Kette angeordnet ist, hat demzufolge die geringste Priorität (vgl. Fig. 3).

Das Ausgangssignal trx_blk_in eines Entscheidungselements 23, das der höher priorisierten Sternschnittstelle zugeordnet ist steuert über die Verstäcker-Steuerschaltung 12 die schaltbaren Verstärker 13 und 14. Die Verstärker-Steuerschaltung 12 enthält zwei ODER-Gatter 25 und 26, einen Inverter 27 und ein UND-Gatter 28. Ein erster Eingang des ODER-Gatters 25 ist mit dem Ausgang des UND-Gatters 20 und ein zweiter Eingang des ODER-Gatters 25 mit dem Ausgang der Speicheranordnung 19 verbunden. Ein invertierender Ausgang des ODER-Gatters 25 führt zu einem ersten Eingang des ODER-Gatters 26, dessen zweitem Eingang das Entscheidungs-Steuersignal trx_blk_in zugeführt wird und dessen Ausgang an den Schalteingang (Schaltsignal drv_en) des schaltbaren Verstärkers 14 angeschlossen ist. Der Inverter 27 erhält das Entscheidungs-Steuersignal trx_blk_in. Der erste Eingang des UND-Gatters 28 ist mit dem Ausgang des Inverters 27, der zweite Eingang mit dem Ausgang der Speicheranordnung 19 und der Ausgang des UND-Gatters 28 mit dem Schalteingang (Schaltsignal rcv_en) des schaltbaren Verstärkers 13 verbunden. Der Ausgang des Inverters 27 ist des weiteren noch mit einem zweiten Eingang des UND-Gatters 20 gekoppelt.

Im folgenden werden die Fälle beschrieben, wenn keine Sternschnittstelle mit höherer Priorität eine Sendeanforderung signalisiert und damit das Entscheidungs-Steuersignal trx_blk_in nicht aktiviert ist:

Im ersten Fall sei vorausgesetzt, dass das lokale Sendeanforderungssignal pt_det_local nicht aktiv ist. Das bedeutet, dass die Speicheranordnung 19 nicht gesetzt ist und auf den zugeordneten Leitungspaaren (5 bis 8) kein Pilotsignal detektiert wurde. Des weiteren sei auch das Sende-Steuersignal en_trx nicht aktiv, was bedeutet, dass auch keine andere Sternschnittstelle das Erkennen eines Pilotsignals signalisiert. Dann wird über die ODER-Gatter 25 und 26 das Schaltsignal drv_en für den schaltbaren Verstärker 14 deaktiviert, d.h. der Verstärker 14 wird abgeschaltet. Zugleich wird auch der schaltbare Verstärker 13 über das Schaltsignal rcv_en abgeschaltet, was durch die Gatter 27 und 28 gewährleistet wird Dieser Fall wird als Ruhezustand des aktiven Sternknotens 9 bezeichnet.

In dem zweiten Fall steuert eine andere Sternschnittstelle die lokale Verstärker-Steuerschaltung 12 der betrachteten Sternschnittstelle mit Hilfe des Sende-Steuersignals en_trx. Durch das aktivierte Sende-Steuersignal en_trx wird der schaltbare Verstärker 14 über das Schaltsignal drv_en angeschaltet und der schaltbare Verstärker 13 über das Schaltsignal rcv_en abgeschaltet. In dieser Konfiguration leitet die Sternschnittstelle die Daten, welches über die Datenleitung 17 in den Sternknoten 9 eingespeist werden, an den angeschlossenen Netzknoten weiter. Damit das auf dem zugeordneten Leitungspaar (5 bis 8) mit den Daten übertragene Pilotsignal, nicht zu einer Rückkopplung in der Verstärker-Steuerschaltung 12 führt, wird das von dem Pilotsignaldetektor 16 erzeugte Steuersignal pt_det an dem UND-Gatter 18 abgeblockt. Das Sende-Steuersignal en_trx sorgt dafür, dass das Steuersignal pt_det keinen Einfluss auf den Setzeingang $\overline{S}$ der Speicheranordnung 19 hat.

Im dritten Fall wird vorausgesetzt, dass eine Sternschnittstelle als erstes ein Pilotsignal auf dem Leitungspaar (5 bis 8) detektiert. Es wird dann über das UND-Gatter 18 und die Speicheranordnung 19 das lokale Sendeanforderungssignal pt_det_local und über das UND-Gatter 20 wird das Sende-Steuersignal en_trx aktiviert. Als Folge der Aktivierung des lokalen Sendeanforderungssignals pt_det_local wird der schaltbare Verstärker 13 angeschaltet und der schaltbare Verstärker 14 abgeschaltet. Von dem angeschlossenen Netzknoten übertragene Daten werden dann in den Sternknoten 9 eingespeist und eine Rückkopplung auf das Leitungspaar (5 bis 8) wird durch den schaltbaren Verstärker 14 verhindert. Alle anderen Sternschnittstellen verhalten sich aufgrund des aktivierten Sende-Steuersignals en_trx wie oben beschrieben. Auf der Datenleitung 17 ankommende Daten werden über einen schaltbaren Verstärker 14 einer anderen Sternschnittstelle zu dem zugeordneten Leitungspaar (5 bis 8) weitergeleitet.

In dem aktiven Sternknoten 9 ohne eine Entscheidungsschaltung 22 kann sowohl im Fehlerfall, das bedeutet, dass ein Netzknoten außerhalb des ihm zugeordneten Zeitabschnitts sendet, als auch während des Systemstarts ein gleichzeitiger Zugriff mehrerer Sternschnittstellen auf die Datenleitung 17 auftreten. Das bedeutet, dass gleichzeitig zwei oder mehr unterschiedliche Netzknoten ihre Daten in den aktiven Sternknoten 9 leiten können. Wie das erfindungsgemäße Netzwerk einen solchen Medienzugriffskonflikt auflöst, wird im folgenden beschrieben.

Bei einem Medienzugriffskonflikt hat in einer Sternschnittstelle das Detektieren eines Pilotsignals schon dazu geführt, dass über das Steuersignal pt_det die Speicheranordnung 19 gesetzt ist und somit das lokale Sendeanforderungssignal pt_det_local aktiv ist. Parallel dazu haben eine oder mehrere andere Sternschnittstellen des selben Sternknotens 9 ebenfalls ein Pilotsignal auf ihrem zugehörigen Leitungspaar detektiert und ebenfalls ihr lokales Sendeanforderungssignal pt_det_local aktiviert. In diesem Fall wird das Sende-Steuersignal en_trx durch mehrere Sternschnittstellen aktiviert, ohne dass dies mit Hilfe des UND-Gatters 18 noch Einfluss auf den Inhalt der Speicherschaltung 19 hat. Das Aktivieren des Sende-Steuersignals en_trx durch eine andere Sternschnittstelle kann durch eine Sternschnittstelle mit einer eigenen Sendeanforderung (Pilotsignal liegt vor) nicht erkannt werden, da dies die oben beschriebene "Wired-OR"-Schaltung nicht ermöglicht. Alle Stenschnittstellen mit Sendeabsicht und detektiertem Pilotsignal aktivieren daher ihren jeweiligen schaltbaren Verstärker 13 und schalten den schaltbaren Verstärker 14 ab. Das Ergebnis ist eine Kollision der verschiedenen Daten auf der Datenleitung 17. Durch den jeweils abgeschalteten Verstärker 14 wird diese Kollision jedoch bei den jeweiligen Netzknoten, die ihre Daten zum Sternknoten 9 senden, zunächst nicht sichtbar.

Eine Prioritätensteuerung, die im folgenden beschrieben wird, übernimmt hier die Auflösung dieser unerwünschten Netzwerkkonstellation. Mehrere Sternschnittstellen aktivieren, wie beschrieben, ihr lokales Sendeanforderungssignal pt_det_local. Diese Lokales Sendeanforderungssignale pt_det_local werden in die jeweils zugeordneten Entscheidungselemente 23 eingespeist (vgl. Fig 3). Nur für die Sternurlmittstelle mit der höchsten Priorität bleibt das Entscheidungs-Steuersignal trx_blk_in inaktiv und damit wird in dieser Sternschnittstelle die eingestellte Verstärkerkonfiguration beibehalten. Für alle anderen Sternschnittstellen wird das Entscheidungs-Steuersignal trx_blk_in aktiv und bewirkt eine Änderung innerhalb der Verstärker-Steuerschaltung 12. Über die ODER-Gatter 25 und 26 wird der schaltbare Verstärker 14 angeschaltet und der schaltbare Verstärker 13 abgeschaltet. Zusätzlich verhindert das Entscheidungs-Steuersignal trx_blk_in, dass eine Sternschnittstelle, deren Sendeanforderung sich nicht durchsetzt, weiterhin das Sende-Steuersignal en_trx aktiviert. Das invertierende UND-Gatter 20 verknüpft das lokale Sendeanforderungssignal pt_det_local und das über den Inverter 27 zugeführte Entscheidungs-Steuersignal ntrx_blk_in und bewirkt dadurch, dass das lokale Sendeanforderungssignal pt_det_local bei aktiviertem Entscheidungs-Steuersignal trx_blk_in keinen Einfluss mehr auf das Sende-Steuersignal en_trx hat.

Der Konflikt mehrerer aufeinandertreffender Daten auf der Datenleitung 17 innerhalb des Sternknotens 9 wird aus dem Sternknoten 9 ausgelagert und auf das jeweils mit dem sendenden Netzknoten verbundene Leitungspaar (5 bis 8) weitergegeben. Auf den einem sendenden Netzknoten zugeordneten Leitungspaaren (5 bis 8) kommt es dann zu einem Konflikt zwischen den Daten des sendenden Netzknoten dessen zugeordnete Sternschnittstelle die höchsten Priorität der an dem Konflikt beteiligten Sternschnittstellen aufwast, und den Daten des jeweils an dem Leitungspaar angeschlossenen Netzknotens. Der Medienzugriffskonflikt in einem Netzwerk mit aktiven Sternknoten 9 ist für jeden sendenden Netzknoten erkennbar. Dieser Netzknoten wird in die Lage versetzt, den eigenen Sendevorgang bei einem Konflikt einzustellen.

Zur einwandfreien Funktion des aktiven Sternknotens 9 ist es erforderlich, dass für die Dauer einer gewissen Totzeit kein Netzknoten aktiv ist oder Nachrichten bzw. Daten sendet. In diesem Zustand wind der Sternknoten völlig undurchlässig geschaltet (d.h. alle Verstärker 13 und 14 sind deaktiviert). In diesem Zustand wartet eine Sternschnittstelle in dem Sternknoten 9 auf ein neues Pilotsgnal, mit dem ein Ubertragungswunsch von Daten angegeben wird.

Grundsätzlich gilt, dass das Pilotsignal immer vor dem Beginn der tatsächlichen Nachrichtenübertragung ausgesendet wenden muss. Nur dann ist sichergestellt, dass der aktive Sternknoten 9 in einer konfliktfreien Kommunikationsregelung (TDMA) rechtzeitig konfiguriert wird und auch der Beginn der Nachricht alle anderen Netzwerkknoten erreicht.

In Fig. 4 ist dargestellt, auf welche Weise das Pilotsignal in einem Netzknoten 1 bis 4 erzeugt und über ein Leitungspaar 5 bis 8 übertragen wird. Wenn ein Netzknoten eine Daten zu anderen Netzknoten senden möchte, erhält ein Pilotsignalgenerator 29 über eine Leitung 30 beispielsweise ein Startsignal. Der Pilotsignalgenerator 29 liefert dann ein Pilotsignal zu einem Multiplexer 31, dem noch von einer Leitung 32 zu sendende Daten zugeführt werden. Das von dem Multiplexer 31 abgegebene Signal wird über einen Verstärker 33 auf das zugeordnete Leitungspaar gegeben. Ein von einem anderen Netzknoten stammendes Signal wird von dem Leitungspaar (5 bis 8) über einen Verstärker 34 auf eine Leitung 35 zur weiteren Verarbeitung geführt.

Der in Fig 4 gezeigte Multiplexer kann dabei sowohl als zeitlicher Multiplexer (Senden des Pilotsignals als Start- und Stopsignal jeweils vor und nach der eigentlichen Nachricht) oder als Frequenzmultiplexer ausgestaltet sein. Das bedeutet, dass das Pilotsgnal entweder als ein andauerndes Signal die gesamte zu übertragene Nachricht begleiten kann oder dass es in Form eines Start- und Stopsiguls ausgesendet werden kann. Dabei kann zB. durch unterschiedliche Dauer sichergestellt werden, dass Start- und Stopsignal sich hinreichend unterscheiden und der Wechsel zwischen Übertragungszeitraum und Übertragungspause nicht verwechselt wird.

Das Pilotsignal kann auf verschiedene Weisen erzeugt werden. Eine Möglichkeit besteht darin, dass es ein periodisches Signal sein kann, dessen Frequenzbereich außerhalb des für die Übertragung der Nachrichten genutzten Frequenzbereiches liegt. Dieser Frequenzbereich kann ober- oder unterhalb des Nutzfrequenzbandes liegen, aber auch bei entsprechender Spezifikation des Nutzbandes aufgrund der schmalbandigen Natur des Pilotsignals in "Lücken" des Nutzfrequenzbandes. Eine weitere Möglichkeit ist, die eigentliche Nachricht als symmetrisches Gegentaktsignal und das Pilotsignal als Gleichtaktsgnal zu übertragen. Das Gleichtaktsignal kann sowohl in Form einer konstanten Spannung als auch in Form eines periodischen Signals gestaltet werden. Eine dritte Möglichkeit für das Pilotsignal ist, dass dieses in Form der Nachrichtenübertragung voran- und nachgestellter, spezieller Symbole realisiert wird.

Die vorgeschlagene Erfindung eignet sich besonders gut für die Anwendung in Netzwerken, die nach dem TTP-Protokoll für eine Echtzeit-Kommunikation beispielsweise im Kraftfahrzeug arbeiten (vgl. Elektronik Heft 14 /1999: "TTP: "Drive by Wire" in greifbarer Nähe", Seiten 36 bis 43). Bei diesem Protokoll ist zum einen festgelegt, wann welcher Sender mit Hilfe des konfliktfreien TDMA-Zugriffsverfahren (TDMA= Time Division Multipte Access) senden darf, und zum anderen ist eine Totzeit (Interframegap) definiert, in der kein Sender senden darf. Durch diesen Mechanismus ist unmittelbar gewährleistet, dass der aktive Sternknoten 9 immer wieder in den Ruhezustand zurückgeht. Mit dem TDMA-Verfahren wird gewährleistet, dass immer nur ein Netzknoten zu einer vorbestimmten Zeit eine Nachricht versenden darf und dazu mittels des von ihm ausgesendeten Pilotsignals im Sternknoten die ihm zugeordnete Sternschnittstelle zur Weiterleitung von Nachrichten aktiviert oder veranlasst. Die Auflösung von Medienzugriffskonflikten, zu denen es auch in dem beschriebenen Protokoll während der Phase des Systemstarts kommen kann, wird durch die Prioritätensteuerung gewährleistet.

Ein zusätzlicher Vorteil der vorliegenden Erfindung bei Anwendung auf ein TTP-Netzwerk besteht darin, dass zur Ansteuerung des sogenannten Bus-Wächters (bus guardian) ein Steuersignal im Netzwerkknoten vorliegen muss, das zeitlich kurz vor dem Beginn der Nachrichtenübertragung liegt. Dieses Steuersignal kann unmittelbar zur Ansteuerung des Pilotsignalgenerators 29 verwendet werden, indem dieses Steuersignal auf der Leitung 30 dem Pilotsignalgenerator 29 zugeführt wird. Natürlich kann dieses Steuersignal mit einem entsprechenden zeitlichen Vorlauf aber auch durch die Instanz generiert werden, die einen Sendevorgang im Netzknoten selbst initiiert.

In Fig. 5 ist dieses Steuersignal mit BG und die eigentlichen Daten mit data gekennzeichnet. Das Steuersignal BG ist während der Aussendung von Daten beispielsweise in einem niedrigen Zustand. Während dieses niedrigen Zustandes des Steuersignals sollen die Daten übertragen werden. Ein erster Zeitraumes T1 nach einem Wechsel des Steuersignals in den niedrigen Zustand und ein zweiter Zeitraum T2 vor einem Wechsel des Steuersignals in den hohen Zustand müssen dabei so gewählt werden, dass der aktive Sternknoten 9 korrekt konfiguriert ist und bleibt, um eine Nachricht fehlerlos übertragen zu können. Es bleibt noch zu erwähnen, dass das TTP-Protokoll unterschiedliche (konstante) Nachrichtenverzögerungszeiten zwischen verschiedenen Netzknoten im Netzwerk unterstützt. Damit verstößt die durch den aktiven Sternknoten 9 hervorgerufene Verzögerungszeit nicht gegen das TTP-Protokoll.

Das erfindungsgemäße Netzwerk ermöglicht die Aussendung eines Pilotsignals mit jeder Art von Signalübertragung für die Nachrichten von einem Netzknoten 1 bis 4. Beispielsweise kann für die Nachnchtenübertragung eine symmetrische Gegentaktübertragung, Einzelleiterübertragung oder trägerfrequenzmodulierte Übertragung gewählt werden. Bei gleichtaktmäßiger Kopplung der Leitungspaare 5 bis 8 könnte ggf. auch mit der Nachrichtenübertragung eine Versorgungsspannung übertragen werden.

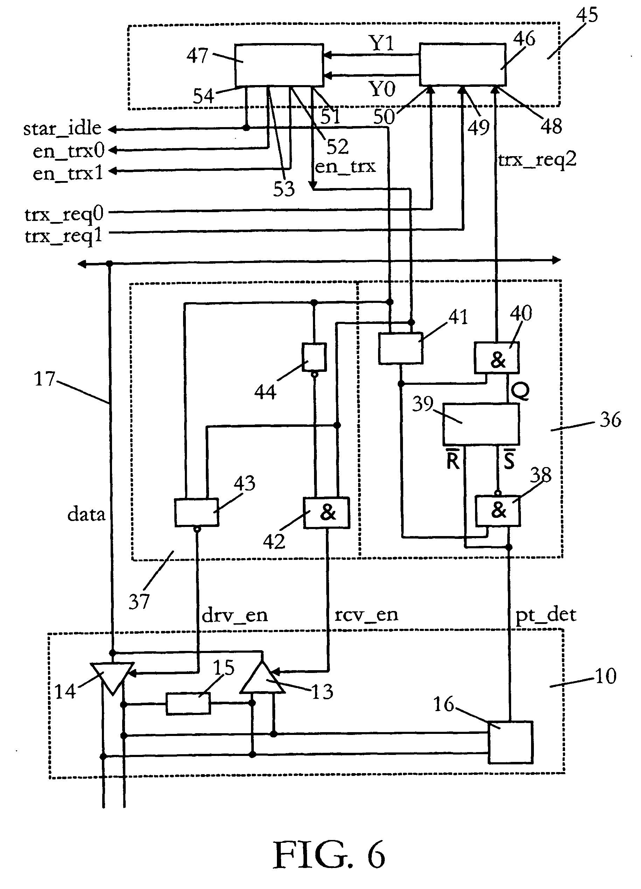

Ein weiteres Ausführungsbeispiel einer Sternschnittstelle zeigt Fig. 6 mit der Leitungsanschlusschaltung 10, einer lokale Pilotsignal-Auswerteschaltung 36 und eine lokale Verstärker-Steuerschaltung 37 enthält. Der Ausgang des das Steuersignal pt_det liefernden Pilotsignaldetektors 16 ist mit einem ersten Eingang eines invertierenden UND-Gatters 38 verbunden, das ebenso wie eine Speicheranordnung 39, ein UND-Gatter 40 und ein ODER-Gatter 41 Bestandteil der Pilotsignal-Auswerteschaltung 36 ist. Der invertierende Ausgang des UND-Gatters 38 ist mit dem Setzeingang $\overline{S}$ der Speicheranordnung 39 verbunden, dessen Rücksetzeingang $\overline{R}$ an den Ausgang des Pilotsgnaldetektors 16 und dessen Ausgang Q an einen ersten Eingang des UND-Gatters 40 angeschlossen ist. Die Speicheranordnung 19 hat die selbe Wahrheitabelle wie die Speicheranordnung 19 der Fig. 2. Der zweite Eingang des UND-Gatters 40 und der zweite Eingang des invertierenden UND-Gatters 38 sind mit dem Ausgang des ODER-Gatters 41 verbunden.

Die Verstärker-Steuerschaltung 37 besteht aus einem UND-Gatter 42, einem invertierenden ODER-Gatter 43 und einem Inverter 44. Der Ausgang der UND-Gatters 42 liefert das Schaltsignal rcv_en für den Schalteingang des schaltbaren Verstärkers 13 und der Ausgang der ODER-Gatters 43 liefert das Schaltsignal drv_en für den Schalteingang des schaltbaren Verstärkers 14. Der erste Eingang des ODER-Gatters 43 ist sowohl mit dem ersten Eingang des UND-Gatters 42 als auch mit dem ersten Eingang des ODER-Gatters 41 und der zweite Eingang des ODER-Gatters 43 mit dem Eingang des Inverters 44 als auch mit dem zweiten Eingang des ODER-Gatters 41 verbunden. Der Ausgang des Inverters 44 weist noch eine Verbindung mit dem zweiten Eingang des UND-Gatters 42 auf.

Der aktive Sternknoten enthält außer einer Vielzahl von Sternschnittstellen eine Entscheidungsschaltung 45 mit einem Entscheidungs-Decoder 46 und einem 1-aus-m-Decoder 47. In der Fig. 2 ist die Entscheidungsschaltung 45 für drei Sternschnittstellen ausgelegt. Das bedeutet, dass der Entscheidungs-Decoder 46 drei Eingänge 48 bis 50 und der 1-aus-m-Decoder 47 vier Ausgänge 51 bis 54 aufweist (m = 4). Der Entscheidungs-Decoder 46 und der 1-aus-m-Decoder 47 sind über zwei Verbindungen (Y0, Y1) miteinander verknüpft. Dem Eingang 48 des Entscheidungs-Decoders 46 wird das Signal trx_req2 von dem Ausgang des UND-Gatters 40 der in Fig. 6 dargestellten Sternschnittstelle und den Eingänge 49 und 50 die Signale trx_req1 und trx_req0 von Ausgängen der UND-Gatters 40 weiterer nicht dargestellter Sternschnittstellen geliefert. Der Ausgang 51 des 1-aus-m-Decoders 47 liefert das Signal en_trx2 zu dem ersten Eingang des ODER-Gatters 41 und die Ausgänge 52 und 53 die Signale en_trx1 und en_trx0 zu den ersten Eingängen der ODER-Gatter 41 der anderen Sternschnittstellen. Ein Signal star_idle des Ausgangs 54 des 1-aus-m-Decoders 47 wird noch jedem zweiten Eingang der ODER-Gatter 41 der drei Sternschnittstellen zugeführt.

Der Entscheidungs-Decoder 46 kann über folgende Wahrheitstabelle

| trx_req2 | trx_req1 | trx_req0 | Y1 | Y0 |
|----------|----------|----------|----|----|
| 0 | 0 | 0 | 0 | 0 |
| 0 | 0 | 1 | 0 | 1 |
| 0 | 1 | x | 1 | 0 |
| 1 | x | x | 1 | 1 |

und der 1-aus-m-Decoder mit m = 4 über folgende Wahrheitstabelle

| Y1 | Y0 | en_trx2 | en_trx1 | en_trx0 | star_idle |
|----|----|---------|---------|---------|-----------|
| 0 | 0 | 0 | 0 | 0 | 1 |
| 0 | 1 | 0 | 0 | 1 | 0 |
| 1 | 0 | 0 | 1 | 0 | 0 |
| 1 1 | | 1 | 0 | 0 | 0 |

beschrieben werden. Mit Y1 bzw. Y0 sind die Ausgänge des Entscheidungs-Decoders 46 bzw. die Eingänge des 1-aus-m-Decoders 47 bezeichnet. "x" bedeutet, dass der Zustand beliebig sein kann.

Es sei vorausgesetzt, dass der aktive Sternknoten 9 im Ruhezustand ist, d.h. kein an den Sternknoten 9 angeschlossener Netzknoten sendet Daten. Wenn ein Netzknoten Daten senden möchte, wird dies von dem Netzknoten durch Aussendung eines Pilotsignals angezeigt. Wenn der Pilotsignaldetektor 16 der zugeordneten Sternschnittstelle das Pilotsignal detektiert wird dies durch Aktivierung des von der lokalen Pilotsignal-Auswerteschaltung 36 erzeugten Sende-Steuersignals trx_req2 dem Entscheidungs-Decoder 46 am Eingang 48 mitgeteilt. Die anderen Eingänge 49 und 50 des Entscheidungs-Decoders 46 erhalten die Sende-Steuersignale trx_req1 und trx_req0, die von den Pilotsignal-Auswerteschaltungen 36 der anderen Sternschnittstellen stammen.

Der Entscheidungs-Decoder 46 und der nachfolgende 1-aus-m-Decoder 47 sind so eingestellt, dass das vom Ausgang 54 des 1-aus-m-Decoders 47 gelieferte Entscheidungs-Steuersignal star_idle aktiviert ist, wenn keines der von den jeweiligen Entscheidungs-Decodern 46 gelieferten Sende-Steuersignale trx_req0, trx_req1 und trx_req2 aktiviert ist. In diesem Zustand kann ein Sende-Steuersignal trx_req0, trx_req1 und trx_req2 aktiviert werden, wenn der zugehörige Pilotsignaldetektor 16 ein Pilotsignal detektiert hat. Die Entscheidungsschaltung 45 ist so eingestellt, dass die das Sende-Steuersignal trx_req2 erzeugende Sternschnittstelle eine höhere Priorität als die das Sende-Steuersignal trx_req1 erzeugende Sternschnittstelle und als die das Sende-Steuersignal trx_req0 erzeugende Sternschnittstelle aufweist. Die das Sende-Steuersignal trx_req1 erzeugende Sternschnittstelle ist wiederum höher als die das Sende-Steuersignal tix_req0 erzeugende Sternschnittstelle priorisiert.

Falls eine Sternschnittstelle das Sende-Steuersignal trx_req0 eher aktiviert, als die anderen Sternschnittstellen mögliche Pilotsignale detektieren, wird über das ODER-Gatter 41 und das invertierende UND-Gatter 38 verhindert, dass die anderen Sende-Steuersignale trx_req1 und trx_req2 aktiviert werden. Das gleiche gilt für die anderen Sende-Steuersignale trx_req1 und trx_req2. Das bedeutet ein aktiviertes Entscheidungs-Steuersignal trx_req0, trx_req1 oder trx_req2 verhindert die Aktivierung der jeweils anderen von einer Pilotsignal-Auswerteschaltung 36 gebildeten Sende-Steuersignale.

Die Verstärker-Steuerschaltung 37 wird ebenfalls von den Entscheidungs-Steuersignalen star_idle und en_trx2 gesteuert, die von dem 1-aus-m-Decoder 47 erzeugt werden. Die anderen beiden in Fig. 6 nicht dargestellten Sternschnittstellen erhalten zur Steuerung ihrer jeweiligen Verstärker-Steuerschaltungen 37 die Entscheidungs-Steuersignale star_idle und en_trx0 bzw. en_trx1. Im Ruhezustand sind beide schaltbaren Verstärker 13 und 14 abgeschaltet. Wenn ein Pilotsignal von dem zugeordneten Pilotsgnaldetektor 16 detektiert wird, wird durch Aktivierung des Entscheidungs-Steuersignals en_trx2 der Verstärker 14 abgeschaltet und der Verstärker 13 angeschaltet. Damit können Daten von dem zugeordneten Netzknoten (1 bis 4) über die Datenleitung 17 zu anderen Sternschnittstellen gerührt werden.

Falls eine Sternschnittstelle kein Pilotsgnal detektiert hat oder die Erzeugung eines Sende-Steuersignals der Pilotsignal-Auswerteschaltung 36 blockiert worden ist, sind die beiden von dem 1-aus-m-Decoder 47 erzeugten und der zugeordneten Sternschnittstelle gelieferten Entscheidungs-Steuersignale star_idle und en_trx2 (oder en_trx0 oder en_trx1) nicht aktiviert. Die Verstärker-Steuerschaltung 37 aktiviert dann den schaltbaren Verstärker 14 zum Empfang von Daten von der Steuerleitung 17. Der Verstärker 13 wird abgeschaltet.

Der Medienzugriffskonflikt wird bei dem Ausführungsbeispiel der Fig 6 durch die Entscheidungsschaltung 45 aufgelöst. Nur die am höchsten priorisierte Sternschnittstelle kann bei gleichzeitiger Sendeanforderung (über das Pilotsignal) Daten senden. Die Sternschnittstellen mit geringerer Priorität erhalten nichtaktivierte Entscheidungs-Steuersignale von dem 1-aus-m-Decoder 47, um ein Anschalten des zugehörigen Verstärkers 13 zu verhindern. Der andere Verstärker 14 ist dagegen angeschaltet.

**Patentansprüche**

1. Netzwerk mit mehreren Netzknoten (1, 2, 3, 4), bei dem wenigstens ein Teil der Netzknoten über wenigstens einen Sternknoten (9) direkt miteinander gekoppelt sind,
   wobei der Sternknoten mehrere Sternschnittstellen (10) enthält, die wenigstens einem Netzknoten zugeordnet sind,
   wobei eine Sternschnittstelle jeweils in Abhängigkeit von einem Pilotsignal zur Weiterleitung von Daten von dem zugeordneten Netzknoten zu den anderen Sternschnittstellen oder von einer anderen Sternschnittstelle zu wenigstens einem der zugeordneten Netzknoten vorhanden ist und
   wobei auch im Fall des gleichzeitigen Eintreffens von wenigstens zwei Pilotsignalen in den jeweiligen Sternschnittstellen eine Entscheidungsschaltung (22) zur Freigabe einer Sternschnittstelle für die Aussendung von Daten vorhanden ist,
   **dadurch gekennzeichnet,**
   **dass** die Entscheidungsschaltung eine Kette von hintereinandergeschalteten Entscheidungselementen (23) enthält,
   **dass** jedes Entscheidungselement Mittel zur Verknüpfung des Ausgangssignals des vorhergehenden Entscheidungselementes mit einem von der Pilotsignal-Auswerteschaltung erzeugten, das Vorhandensein des Pilotsignals angebenden lokalen Sendeanforderungssignal (p_det_local) enthält und
   **dass** das Ausgangssignal des Entscheidungselementes das Entscheidungs-Steuersignal für die dem nächsten Entscheidungselement in der Kette zugeordnete Sternschnittstelle ist.

2. Netzwerk nach Anspruch 1,
   **dadurch gekennzeichnet,**
   **dass** jedes Entscheidungselement ein ODER-Gatter enthält, welches das Ausgangssignal des vorhergehenden Entscheidungselementes mit dem lokalen Sendeanforderungssignal verknüpft und welches als Ausgangssignal das Entscheidungs-Steuersignal erzeugt.

3. Netzwerk nach Anspruch 2,
   **dadurch gekennzeichnet,**
   **dass** jedem Netzknoten im Netzwerk ein bestimmter, periodisch sich wiederholender Zeitabschnitt zur Sendung von Daten zugeordnet ist und
   **dass** ein Netzknoten einen Pilotsignalgenerator enthält, der Mittel for Erzeugung eines Pilotsignals enthält, das entweder den gesamten zugeordneten Zeitabschnitt oder den Anfang und das Ende des Zeitabschnitts angibt.

4. Netzwerk nach Anspruch 2,
   **dadurch gekennzeichnet,**
   **dass** eine Pilotsignal-Auswerteschaltung zur Erzeugung eines Sende-Steuersignals enthalten ist,
   **dass** die Pilotsignal-Auswerteschaltung zur Aktivierung des Sende-Steuersignals vorgesehen ist, wenn ein Pilotsignal von dem zugeordneten Netzknoten ausgesendet und von keiner anderen Sternschnittstelle mit höherer Priorität gleichzeitig ein Pilotsignal von dem dieser anderen Sternschnittstelle zugeordneten Netzknoten ausgesendet worden ist, und
   **dass** eine Sternschnittstelle nur bei aktiviertem Sende-Steuersignal zur Weiterleitung von Daten von dem zugeordneten Netzknoten zu den anderen Sternschnittstellen vorgesehen ist.

5. Netzwerk nach Anspruch 4,
   **dadurch gekennzeichnet,**
   **dass** jede Sternschnittstelle ein erstes und zweites Schaltelement enthält,
   **dass** das erste Schaltelement im aktivierten Zustand zum Durchlassen von Daten von dem zugeordneten Netzknoten zu den anderen Sternschnittstellen und das zweite Schaltelement im aktivierten Zustand zum Durchlassen von Daten von den anderen Sternschnittstellen zu dem zugeordneten Netzknoten vorgesehen ist und
   **dass** das erste Schaltelement bei aktiven Sende-Steuersignal im aktiven Zustand und das zweite Schaltelement im nicht aktiven Zustand ist.

6. Netzwerk nach Anspruch 5,
   **dadurch gekennzeichnet,**

**dass** das erste und zweite Schaltelement jeweils ein schaltbarer Verstärker ist.

7. Sternknoten (9) für ein Netzwerk zur Kopplung von mehreren Netzknoten (1, 2, 3, 4),
wobei der Sternknoten mehrere Sternschnittstellen (10) enthält, die wenigstens einem Netzknoten zugeordnet sind und die jeweils in Abhängigkeit von einem Pilotsignal Mittel zur Weiterleitung einer Nachricht von dem zugeordneten Netzknoten zu den anderen Sternschnittstellen oder von einer anderen Sternschnittstelle zu wenigstens einem der zugeordneten Netzknoten enthalten, und
wobei auch im Fall des gleichzeitigen Eintreffens von wenigstens zwei Pilotsignalen eine Entscheidungsschaltung (22) zur Freigabe einer Sternschnittstelle für die Aussendung von Daten enthalten ist,
**dadurch gekennzeichnet,**
**dass** die Entscheidungsschaltung eine Kette von hintereinandergeschalteten Entscheidungselementen enthält,
**dass** jedes Entscheidungselement Mittel zur Verknüpfung des Ausgangssignals des vorhergehenden Entscheidungselementes mit einem von der Pilotsignal-Auswerteschaltung erzeugten, das Vorhandensein des Pilotsignals angebenden lokalen Sendeanforderungssignals (p_det_local) enthält ist und
**dass** das Ausgangssignal des Entscheidungselementes das Entscheidungs-Steuersignal für die dem nächsten Entscheidungselement in der Kette zugeordnete Sternschnittstelle ist.

## Claims

1. A network comprising a plurality of network nodes (1,2,3,4), in which network at least part of the network nodes are directly coupled to one another via at least one star node (9),
in which the star node comprises a plurality of star interfaces (10) which are assigned to at least one network node,
in which a star interface is present for conveying data from the assigned network node to the other star interfaces or from another star interface to at least one of the assigned network nodes in dependence on a respective pilot signal, and
in which also in the case of the simultaneous arrival of at least two pilot signals at the respective star interfaces, a decision circuit (22) is present for releasing one star interface for the transmission of data,
**characterized in that** the decision circuit comprises a chain of in-line decision elements (23),
**in that** each decision element comprises means for combining the output signal from the previous decision element with a local send request signal (p_det_local) generated by the pilot signal evaluation circuit and indicating the presence of the pilot signal and
**in that** the output signal of the decision element is the decision control signal for the star interface assigned to the next decision element in the chain.

2. A network as claimed in claim 1,
**characterized in that** each decision element includes an OR gate which combines the output signal of the previous decision element with the local send request signal and which generates the decision control signal as its output signal.

3. A network as claimed in claim 2,
**characterized in that** to each network node in the network a certain periodically recurrent time slot is assigned for the transmission of data, and
**in that** a network node includes a pilot signal generator which comprises means for generating a pilot signal that indicates either the whole assigned time slot, or the beginning and the end of the time slot.

4. A network as claimed in claim 2,
**characterized in that** a pilot signal evaluation circuit is provided for generating a send control signal,
**in that** the pilot signal evaluation circuit is provided for activating the send control signal if a pilot signal has been sent from the assigned network node and no other star interface having a higher priority has simultaneously sent a pilot signal from the network node assigned to this other star interface, and
**in that** a star interface is provided for conveying data from the assigned network node to the other star interfaces only when the send control signal is activated.

5. A network as claimed in claim 4,
**characterized in that** each star interface includes a first and a second switching element,
**in that** the first switching element in the activated state passes data from the assigned network node to the other star interfaces and the second switching element in the activated state passes data from the other star interfaces to the assigned network node, and

**in that** the first switching element in the event of an active send control signal is in the active state and the second switching element in the non-active state.

6. A network as claimed in claim 5, **characterized in that** the first and second switching elements are each a switchable amplifier.

7. A star node (9) for a network for coupling a plurality of network nodes (1,2,3,4), wherein the star node includes a plurality of star interfaces (10) which are assigned to at least one network node and which, in dependence on a pilot signal, comprise means for conveying a message from the assigned network node to the other star interfaces, or from another star interface to at least one of the assigned network nodes,
and in which also in the event of simultaneous arrival of at least two pilot signals, a decision circuit (22) releases one star interface for the transmission of data,
**characterized in that** the decision circuit includes a chain of in-line decision elements,
**in that** each decision element comprises means for combining the output signal of the previous decision element with a local send request signal generated by the pilot signal evaluation circuit and indicating the presence of the pilot signal, and
**in that** the output signal of the decision element is the decision control signal for the star interface assigned to the next decision element in the chain.

**Revendications**

1. Réseau avec plusieurs noeuds de réseau (1, 2, 3, 4) dans lequel au moins une partie des noeuds de réseau sont couplés directement l'un à l'autre par l'intermédiaire d'au moins un noeud central (9),
le noeud central contenant plusieurs interfaces centrales (10) qui sont affectées à au moins un noeud de réseau, une interface centrale étant respectivement présente en fonction d'un signal pilote vers la transmission de données du noeud de réseau affecté aux autres interfaces centrales ou d'une autre interface centrale vers au moins l'un des noeuds de réseau affectés et
un circuit de décision (22) étant prévu pour la libération d'une interface centrale pour la transmission de données, même en cas d'incidence simultanée d'au moins deux signaux pilotes dans les interfaces centrales respectives,
**caractérisé en ce**
**que** le circuit de décision contient une chaîne d'éléments de décision (23) montés successivement;
**que** chaque élément de décision contient des moyens pour la liaison du signal de sortie de l'élément de décision précédent avec un signal de demande de transmission local (cp_det_local) indiquant la présence du signal pilote et produit par le circuit d'évaluation du signal pilote et
**que** le signal de sortie de l'élément de décision est le signal de commande de décision pour l'interface centrale affectée à l'élément de décision suivant dans la chaîne.

2. Réseau selon la revendication 1,
**caractérisé en ce**
**que** chaque élément de décision contient une grille OU qui relie le signal de sortie de l'élément de décision précédent avec le signal local de demande de transmission et qui produit comme signal de sortie le signal de commande de décision.

3. Réseau selon la revendication 2,
**caractérisé en ce**
**qu'**un segment temporel déterminé, récurrent périodiquement, est affecté à chaque noeud de réseau dans le réseau pour la transmission de données et
**qu'**un noeud de réseau contient un générateur de signaux pilotes qui contient des moyens pour la production d'un signal pilote qui indique soit le segment temporel affecté complet ou le début et la fin du segment temporel.

4. Réseau selon la revendication 2,
**caractérisé en ce**
**qu'**un circuit d'évaluation de signaux pilotes est contenu pour la production d'un signal de commande de transmission,
**que** le circuit d'évaluation de signaux pilotes est prévu pour l'activation du signal de commande de transmission lorsqu'un signal pilote a été transmis par le noeud de réseau affecté et qu'un signal pilote du noeud de réseau affecté à cette autre interface centrale n'a été transmis simultanément par aucune autre interface centrale de priorité plus élevée et qu'une interface centrale n'est prévue qu'en cas de signal de commande de transmission activé pour la transmission de données du noeud de réseau affecté vers les autres interfaces centrales.

**5.** Réseau selon la revendication 4,
**<u>caractérisé en ce</u>**
**que** chaque interface centrale contient des premier et deuxième éléments de commutation, que le premier élément de commutation est prévu à l'état activé pour le passage de données du noeud de réseau affecté vers les autres interfaces centrales et le deuxième élément de commutation à l'état activé pour le passage de données des autres interfaces centrales vers le noeud de réseau affecté et
**que** le premier élément de commutation est l'état actif en cas de signal de commande de transmission actif et le deuxième élément de commutation est à l'état inactif.

**6.** Réseau selon la revendication 5,
**<u>caractérisé en ce</u>**
**que** les premier et deuxième éléments de commutation sont chacun un amplificateur commutable.

**7.** Noeud central (9) pour un réseau de couplage de plusieurs noeuds de réseau (1,2,3,4),
le noeud central contenant plusieurs interfaces centrales (10) qui sont affectées à au moins un noeud de réseau et contiennent chacune, en fonction d'un signal pilote, des moyens pour la transmission d'un message du noeud de réseau affecté vers les autres interfaces centrales ou d'une autre interface centrale vers au moins l'un des noeuds de réseau affectés et
un circuit de décision (22) étant prévu pour la libération d'une interface centrale pour la transmission de données, même en cas d'incidence simultanée d'au moins deux signaux pilotes,
**<u>caractérisé en ce</u>**
**que** le circuit de décision contient une chaîne d'éléments de décision (23) montés successivement;
**que** chaque élément de décision contient des moyens pour la liaison du signal de sortie de l'élément de décision précédent avec un signal de demande de transmission local (cp_det_local) indiquant la présence du signal pilote et produit par le circuit d'évaluation du signal pilote et
**que** le signal de sortie de l'élément de décision est le signal de commande de décision pour l'interface centrale affectée à l'élément de décision suivant dans la chaîne.

FIG. 1

FIG. 3

FIG. 2

FIG. 4

FIG. 5

FIG. 6